# EUROPEAN PATENT APPLICATION

(11) **EP 4 793 044 A1**
(43) Date of publication of application: **19.08.2026**
(21) Application number: 24877514.0
(22) Date of filing: 08.10.2024
(51) Int. Cl.: B41J 2/045, B41J 2/07, B41J 2/14, G06K 15/10, G06K 15/02

(54) **PRINTING SYSTEM AND PRINTING METHOD**

(30) Priority: 10.10.2023 KR 20230134359
(71) Applicant: Samsung Display Co., Ltd., Yongin-si, Gyeonggi-do 17113 (KR)
(72) Inventor: HAN, Jong Kil, Yongin-si, Gyeonggi-do 17113 (KR); TAKEUCHI, Setsu, Yongin-si, Gyeonggi-do 17113 (KR); TOMOEDA, Satoshi, Yongin-si, Gyeonggi-do 17113 (KR); HUH, Myung Soo, Yongin-si, Gyeonggi-do 17113 (KR)
(74) Representative: Marks & Clerk LLP
(86) International application number: PCT/KR2024/015326
(87) International publication number: WO 2025/079978

(57) **Abstract**

A printing system and a printing method, in which precision of a printing process may be enhanced, the printing system may include a controller configured to generate printing data, a user device configured to generate a first control command, generate modulation data based on a user input, and generate a second control command based on the user input, an additional controller configured to receive the printing data and the second control command and generate a driving signal based on the second control command, and including a memory storing waveform information received from the user device, and a printing device configured to perform a printing operation based on the driving signal.

## Description

### Technical Field

One or more embodiments relate to a printing system and a printing method, and more particularly, to a printing system and a printing method in which precision of a printing process is enhanced.

### Background Art

Industrial inkjet printers use not only general dyes, but also metal materials, such as copper, gold, and silver, ceramics, and polymers, as printing solutions. The industrial inkjet printers are used for industrial graphics, displays, and solar cells, by directly printing on various targets, such as substrates, films, fabrics, and displays. In particular, in display fields, processes using inkjet printers may be applied to color filter manufacturing, liquid crystal alignment processes, organic emission layer manufacturing, and quantum dot emission layer manufacturing. A printing system configured to perform an inkjet printing operation includes an inkjet printing head including at least one ink transfer path (or nozzle).

In the case that the printing system configured to perform the inkjet printing operation uses a general-purpose inkjet driver, a uniform and unified ejection waveform is generated. Because the uniform and unified ejection waveform is used, precision of a printing process decreases due to a change in viscosity of ink or expansion of a material according to temperature.

### Disclosure of Invention

### Technical Problem

An object of the present disclosure is to provide a printing system and a printing method in which precision of a printing process is improved, in order to solve the above-described problems as well as various other problems. However, the above object is illustrative and is not intended to limit the scope of the present disclosure.

### Solution to Problem

According to one or more embodiments, a printing system may include a controller configured to generate printing data, a user device configured to generate a first control command, generate modulation data based on a user input, and generate a second control command based on the user input, an additional controller configured to receive the printing data and the second control command and generate a driving signal based on the second control command, and including a memory storing waveform information received from the user device, and a printing device configured to perform a printing operation based on the driving signal.

In the case that the second control command is a first signal, the driving signal may be a first driving signal including same information as the printing data.

In the case that the second control command is a second signal, the driving signal may be a second driving signal including a piece of waveform information loaded from the memory based on the modulation data from among a plurality of pieces of pre-stored waveform information.

The printing data may include location data about locations where ink may be ejected from the printing device, and volume data about ink volume ejected from each nozzle included in the printing device.

The modulation data may include address information about where a plurality of pieces of waveform information may be stored in the memory.

In the case that the second control command is a second signal, the driving signal may be a second driving signal including waveform information assigned to the address information in the memory.

The printing device may include a printing head configured to eject ink, wherein the printing head may include a chamber storing ink, and a spray assembly disposed below the chamber, the spray assembly including an ink transfer path connected to inside of the chamber, and the spray assembly externally ejecting the ink from a bottom surface that has passed through the ink transfer path.

The spray assembly may further include a piezoelectric element layer disposed below the chamber, and a nozzle plate disposed below the piezoelectric element layer and having a bottom surface being the bottom surface of the spray assembly.

The first control command, the second control command, and the modulation data may be implemented as digital signals.

The second control command may be generated based on a user input that may be input to the user device.

According to one or more embodiments, a printing method may include receiving printing data from a controller, receiving a first control command from a user device, receiving modulation data from the user device and storing the modulation data based on the first control command, receiving a second control command from the user device, generating a driving signal based on the second control command, and transmitting the driving signal to a printing device.

In the case that the second control command may not be received for a pre-set time, the driving signal may be a dummy driving signal.

In the case that the second control command may be received for a pre-set time and the second control command may be a first signal, the driving signal may be a first driving signal including same information as the printing data.

In the case that the second control command may be received for a pre-set time and the second control command may be a second signal, the driving signal may be a second driving signal including a piece of waveform information from among a plurality of pieces of pre-stored waveform information, the piece of waveform information may be loaded from a memory and may be based on the modulation data.

The printing data may include location data about locations where ink may be ejected from the printing device, and volume data about ink volume that may be ejected from each nozzle included in the printing device.

The second driving signal may include a waveform signal obtained by changing the location data and the volume data based on the modulation data.

The first control command, the second control command, and the modulation data may be implemented as digital signals.

The second control command may be generated based on a user input that may be input to the user device.

### Advantageous Effects of Invention

According to an embodiment described above, a printing system and a printing method, in which precision of a printing process is enhanced, may be realized. Of course, the scope of the disclosure may not be limited by such effects.

### Brief Description of Drawings

FIGS. 1 to 3 are conceptual diagrams schematically illustrating a printing system according to an embodiment.
FIG. 4 is a schematic cross-sectional view of an example of a printing head of FIG. 3.
FIG. 5 is a flowchart of processes performed by a controller of FIG. 1.
FIG. 6 is a flowchart of processes performed by an additional controller of FIG. 1.
FIG. 7 is a schematic diagram showing examples of a first control command and a second control command which may be implemented as binary numbers.
FIG. 8 is a schematic diagram showing examples of a first signal, a second signal, and modulation data which may be implemented as binary numbers.
FIG. 9 is a schematic diagram showing a result of performing a printing operation by using a printing system and a printing method according to a comparative example.
FIG. 10 is a schematic diagram showing a result of performing a printing operation by using a printing system and a printing method according to an embodiment.

### Best Mode for Carrying out the Invention

The disclosure is subject to various modifications and may have many embodiments, certain of which are illustrated in the drawings and further described in the detailed description. The effects and features of the disclosure, and methods of achieving them will become clear with reference to the embodiments described below in detail together with the drawings. However, the disclosure is not limited to the embodiments described herein and may be implemented in various forms.

Hereinafter, embodiments will be described in detail with reference to the accompanying drawings, and when being described with reference to the drawings, the same or corresponding components are given the same reference numerals, and duplicate descriptions thereof will be omitted.

In the following embodiments, the terms "first", "second", etc. are not intended to be limiting, however are used to distinguish one component from another. In the following embodiments, the singular expression includes the plural unless the context clearly indicates otherwise.

In the following embodiments, when layers, films, regions, plates, or other components are described as being "on" another component, this includes not only when they are "directly on" the other component, but also when one or more other components are interposed therebetween.

In the drawings, components may be exaggerated or reduced in size for ease of illustration. For example, the size and thickness of each configuration shown in the drawings are arbitrary for purposes of illustration and the disclosure is not necessarily limited to those shown.

In the following embodiments, the terms "comprise," or "comprising" indicate the presence of stated features or components described in the specification, and do not preclude the possibility that one or more other features or components may be added.

In the following embodiments, when a portion of a film, region, component, etc. is described as being on or over another portion, this includes not only when it is directly on the other portion, but also when one or more other films, regions, components, etc. are interposed therebetween.

In some embodiments, a particular sequence of processes may be performed in a different order than that described. For example, two processes described in succession may be performed substantially simultaneously, or may be performed in the opposite order from the order described.

In the specification, the expression such as "A and/or B" may include A, B, or A and B. Furthermore, the expression such as "at least one of A and B" may include A, B, or A and B.

In the following embodiments, when layers, regions, or components are connected to each other, the layers, the regions, or the components may be directly connected to each other, or another layer, another region, or another component may be interposed between the layers, the regions, or the components and thus the layers, the regions, or the components may be indirectly connected to each other. For example, in the following embodiments, when layers, regions, or components are electrically connected to each other, the layers, the regions, or the components may be directly electrically connected to each other, or another layer, another region, or another component may be interposed between the layers, the regions, or the components and thus the layers, the regions, or the components may be indirectly electrically connected to each other.

In the following embodiments, the terms x-axis, y-axis, and z-axis are not limited to, however may be interpreted in a broad sense to include three axes in a Cartesian coordinate system. For example, the x-axis, y-axis, and z-axis may be orthogonal to each other, however, may also refer to different directions that are not orthogonal to each other.

A printing system according to an embodiment will be described in detail based on the above descriptions.

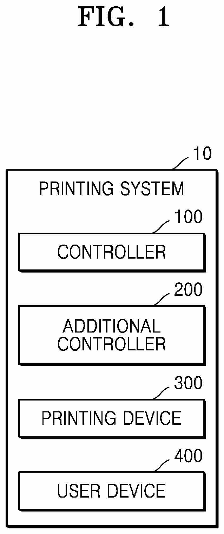

FIGS. 1 to 3 are conceptual diagrams schematically illustrating a printing system 10 according to an embodiment.

As shown in FIGS. 1 to 3, the printing system 10 according to an embodiment may include a controller 100, an additional controller 200, and a printing device 300. The printing system 10 according to an embodiment may further include a user device 400.

For reference, the controller 100 and the printing device 300 may be a printing system 10, and the additional controller 200 may be a component added between the controller 100 and the printing device 300. For example, the printing device 300 may perform a printing operation according to printing data from the controller 100 or a separate driving signal generated based on the printing data. Here, locations where ink may be ejected from the printing device 300 and ink volume ejected from each nozzle included in the printing device 300 may be uniform and unified. In the case that the additional controller 200 may be added between the controller 100 and the printing device 300, the uniform and unified ink ejection locations and ejected ink volume of each nozzle may be changed by the additional controller 200.

The controller 100 may generate a driving signal for operating the printing operation of the printing device 300 or generate the printing data to be transmitted to the additional controller 200. The controller 100 may include a first transceiver 110, a first storage 120, and a first processor 130. For example, the controller 100 may be implemented as a type of a circuit board. The controller 100 may generate the printing data based on an input image.

The first transceiver 110 may be an input/output interface or network interface of a pre-determined standard. The first transceiver 110 may transmit/receive data to/from the additional controller 200 described below. For example, the first transceiver 110 may transmit/receive data to/from a second transceiver 210 of the additional controller 200 described below. For example, the first transceiver 110 may transmit the printing data to the second transceiver 210 described below, or receive another piece of data from the second transceiver 210. In some cases, the first transceiver 110 may transmit/receive data to/from the user device 400 described below.

The first storage 120 may store data or instructions supporting various functions of the controller 100. For example, the first storage 120 may be a non-volatile memory, and may include at least one type of storage media from among flash memory type, hard disk type, solid state disk (SSD) type, silicon disk drive (SDD) type, multimedia card micro type, and card type memories (e.g., secure digital (SD) and extreme digital (XD) memories), read-only memory (ROM), electrically erasable programmable read-only memory (EEPROM), programmable read-only memory (PROM), magnetic memory, magnetic disk and optical disk. For example, the first storage 120 may include a non-volatile memory and a volatile memory (e.g., random access memory (RAM) or a static random access memory (SRAM)).

The first processor 130 may control other configurations by executing an instruction stored in the first storage 120. The first processor 130 may execute an instruction stored in the first storage 120.

The first processor 130 may perform an operation and control another device. The first processor 130 may indicate a central processing unit (CPU), an application processor (AP), or a graphical processing unit (GPU). The CPU, AP, or GPU may include one or more cores therein, and the CPU, AP, or GPU may operate by using an operating voltage and a clock signal.

The first processor 130 may process a signal, data, or information input or output through components described above, or process an instruction stored in the first storage 120, thereby providing suitable information or function to a user or processing the same.

The printing data may denote data obtained by converting an input image to a pre-set format to drive the printing device 300. For example, the printing data may include location data about locations where ink may be ejected from the printing device 300, and volume data about ink volume ejected from each nozzle included in the printing device 300.

The driving signal may be a signal waveform and may be a signal for instructing the printing operation of the printing device 300. For example, the locations where ink may be ejected from the printing device 300 and/or the ink volume ejected from each nozzle may be determined according to a waveform or frequency of the driving signal.

The additional controller 200 may be electrically connected to the controller 100, and electrically connected to the printing device 300. The additional controller 200 may be added to electrically connect between the controller 100 and the printing device 300. For example, the controller 100 and the printing device 300 may be a printing system, and may be a general-purpose printing system or a generally used printing system. For example, the additional controller 200 may be a configuration for enhancing precision of the printing operation by being added to a general-purpose printing system or a generally used printing system.

The additional controller 200 may include the second transceiver 210, a second storage 220, and a second processor 230. Details about the second transceiver 210 may be the same as those about the first transceiver 110. For example, the second transceiver 210 may be an input/output interface or network interface of a pre-determined standard. For example, the second transceiver 210 may transmit/receive data to/from the controller 100 or the first transceiver 110 described above. The second transceiver 210 may transmit/receive data to/from the user device 400 described below. Details about the second storage 220 may be the same as those about the first storage 120. Details about the second processor 230 may be the same as those about the first processor 130.

For example, the additional controller 200 may receive the printing data from the controller 100, receive a second control command from the user device 400, and include a memory storing waveform information received from the user device 400. Here, the waveform information received from the user device 400 may be waveform information capable of replacing the driving signal generated according to the printing data, and may be information generated by the user device 400 based on data pre-learned through a learning algorithm or the like. In some cases, the received waveform information may be information generated by a setting value directly input by the user.

For example, the controller !00 and the printing device 300 may exchange data, and the printing device 300 may receive the driving signal from the controller 100 and perform the printing operation according to the received driving signal. The additional controller 200 of the specification may be a configuration that accesses data transmitted from the controller 100 to the printing device 300 and converts or replaces the data transmitted from the controller 100 to the printing device 300 to or with another piece of data. In this regard, the additional controller 200 may be electrically connected to a data wire from the controller 100 to the printing device 300. As a result, the data transmitted from the controller 100 may be converted to another piece of data by the additional controller 200, and the printing device 300 may perform the printing operation according to the driving signal generated based on another piece of data. Here, another data prepared for the conversion may be big data and may be a setting value that may be learned based on numerous printing results or may be input (e.g., directly input) by the user, or data to which the setting value may be applied.

The user device 400 may be a computing device capable of driving an application program, an application, or the like, and may include a user terminal, a computer, or a server. The user device 400 may receive a user input from the user, convert the received user input into a data signal, and transmit the data signal to the additional controller 200 or the second transceiver 210.

The user device 400 may transmit/receive data to/from the additional controller 200 or to/from the second transceiver 210 of the additional controller 200. In some cases, the user device 400 may transmit/receive data to/from the controller 100 or to/from the first transceiver 110 of the controller 100.

For example, the user device 400 may generate a first control command, generate modulation data based on the user input, and generate the second control command based on the user input.

For example, the first control command, the second control command, and the modulation data may be implemented as digital signals (e.g., 0, 1, or a combination of 0 and 1). For example, the second control command may be generated based on the user input that may be input to the user device 400.

Although not illustrated, the user device 400 may be connected to an input part and an output part via wires and/or wirelessly. The input part may include a user interface, such as a key pad, a dome switch, a touch pad (contact capacitance type, pressure resistive type, an infrared detection type, surface ultrasonic wave conduction type, integral tension measuring type, piezo-effect type, or the like), a mouse, a remote controller, a jog wheel, or a jog switch. The output part may include a display. The display may provide a result image output from the user device 400 to enable an operator to monitor a displayed image. The display may provide to the operator visual information and/or auditory information about the printing operation. The display may include a computer screen, a television (TV) screen, a mobile terminal screen, or a projector. In the case that the display is a touch screen, the touch screen may also operate as the input part.

The printing device 300 is a device configured to eject ink at a desired location with desired volume onto a substrate 10 described below, and may be a device configured to perform an inkjet printing operation. The printing device 300 may include a third transceiver 310, a driving stage 320, a driving device 330, and a printing head 340. For example, the printing device 300 may perform the printing operation based on the driving signal. For example, the driving signal may include a dummy driving signal, a first driving signal, and a second driving signal.

Details about the third transceiver 310 may be the same as those about the first transceiver 110. For example, the third transceiver 310 may be an input/output interface or network interface of a pre-determined standard. For example, the third transceiver 310 may transmit/receive data to/from the controller 100, the first transceiver 110, the additional controller 200, or the second transceiver 210. Details about a third storage may be the same as those about the first storage 120. Details about a third processor may be the same as those about the first processor 130.

The substrate 10 is a target on which printing is performed, and ink may be ejected thereto. The driving stage 320 may be disposed below the substrate 10. For example, the driving stage 320 and the substrate 10 may be fixed together, and the substrate 10 may move together in the case that the driving stage 320 moves. As another example, the driving stage 320 may not move, and only the substrate 10 disposed on the driving stage 320 may move. For example, the substrate 10 may move on the driving stage 320 according to an air floating technology, and the driving stage 320 may be a component for applying the air floating technology to the substrate 10.

The driving device 330 may move the substrate 10 based on a pulse number. For example, the driving device 330 may include a motor configured to move the substrate 10 based on the pulse number. For example, the driving device 330 may be an air flow device configured to move the substrate 10 based on the pulse number. For example, the driving device 330 may be a configuration for moving the substrate 10 by moving the driving stage 320 or for moving only the substrate 10 floating on the driving stage 320.

The printing head 340 may denote a head of the printing device 300. The printing head 340 may include at least one nozzle for ejecting an ink material. In the case that the printing head 340 includes multiple nozzles, the nozzles may be spaced apart from each other by a certain distance. For example, the printing head 340 may eject ink onto a top surface of the substrate 10 according to a cycle obtained based on information about the pulse number.

According to an embodiment, in the case that the second control command is a first signal, the driving signal may be a first driving signal including waveform information determined based on the printing data.

According to an embodiment, in the case that the second control command is a second signal, the driving signal may be a second driving signal including a piece of waveform information loaded from the memory based on the modulation data from among multiple pieces of pre-stored waveform information.

According to an embodiment, the printing data may include location data about locations where ink is ejected from the printing device 300, and volume data about ink volume ejected from each nozzle included in the printing device 300.

According to an embodiment, the modulation data may include address information about where multiple pieces of waveform information may be stored in the memory of the additional controller 200. Here, in the case that the second control command is a second signal, the driving signal may be a second driving signal including waveform information assigned to the address information in the memory.

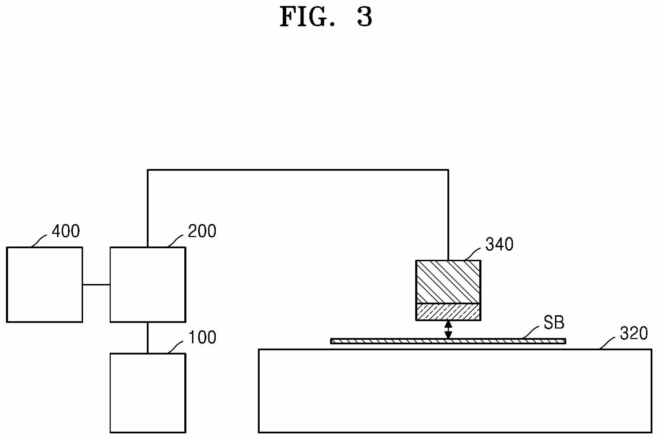

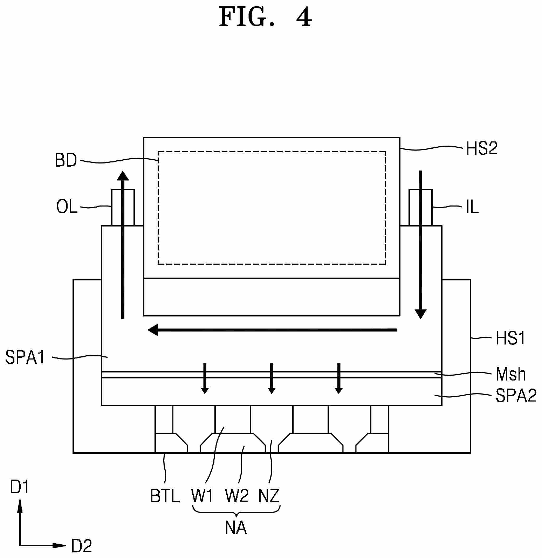

FIG. 4 is a schematic cross-sectional view of an example of the printing head of FIG. 3.

For reference, while describing FIG. 4, details that may be the same as or overlap those of FIG. 3 may be omitted. The printing head 340 of FIG. 3 may be a configuration for printing ink, such as a quantum dot ink composition.

As shown in FIG. 4, the printing head 340 may include a chamber IC storing inkjet printing ink, and a spray assembly NA configured to externally eject ink from the chambers SPA1 and SPA2. The chambers SPA1 and SPA2 and the spray assembly NA may be included inside a first housing HS1 of the printing head 340. The first housing HS1 may be connected to a second housing HS2, and a driving circuit may be provided inside the second housing HS2. The driving circuit BD may control a piezoelectric element layer W1 described below.

Ink of the printing head 340 may be injected into the chambers SPA1 and SPA2 through an ink inlet and externally discharged from the chambers SPA1 and SPA2 through an ink outlet OL. As such, ink may move from the ink inlet IL to the ink outlet OL through the chambers SPA1 and SPA2. The ink inlet IL may penetrate the first housing HS1 to communicate with the chambers SPA1 and SPA2 to inject ink into the chambers SPA1 and SPA2, and the ink outlet OL may penetrate the first housing HS1 to communicate with the chamber IC to discharge ink from the chambers SPA1 and SPA2. The ink inlet IL and the ink outlet OL may be opened or closed as needed, and may be controlled manually or automatically.

The chambers SPA1 and SPA2 for storing ink may include the first chamber SPA1 extended to the ink inlet IL and the ink outlet OL, and the second chamber SPA2 separated from the first chamber SPA1 by a mesh layer Msh.

Ink may be filtered by the mesh layer Msh while moving from the first chamber SPA1 to the second chamber SPA2. Ink that has moved into the second chamber SPA2 may have been filtered, and thus impurities may have been removed therefrom. Ink may be discharged to the outside of the spray assembly NA through an ink transfer path of the spray assembly NA.

The spray assembly NA may externally discharge ink through a bottom surface BTL. The bottom surface BTL of the spray assembly may be penetrated by the ink transfer path NZ. The ink transfer path NZ may be a nozzle and may be controlled to externally discharge a suitable amount of ink.

In other words, the spray assembly NA may be disposed below the chambers SPA1 and SPA2, include the ink transfer path NZ connected to the inside of the chambers SPA1 and SPA2, and externally discharge ink that has passed the ink transfer path NZ through the bottom surface BTL.

The spray assembly NA may include the piezoelectric element layer W1 and a nozzle plate W2 disposed below the piezoelectric element layer W1. The piezoelectric element layer W1 may include a piezoelectric material, for example, lead zirconate titanate (PZT). The piezoelectric element layer W1 may be controlled according to an electric signal transmitted from the driving circuit, and include a configuration of a conventionally known piezoelectric actuator. The nozzle plate W2 may include an organic material such as polyimide (PI), or include a metal material such as stainless steel (SUS), iron (Fe), chromium (Cr), or nickel (Ni).

The spray assembly NA may include the ink transfer path NZ penetrating the piezoelectric element layer W1 and the nozzle plate W2. The ink transfer path NZ may have a bottleneck structure. Accordingly, ink discharged through the ink transfer path NZ may have higher hydraulic pressure through the bottleneck structure.

According to an embodiment, the printing device 300 may include the printing head 340 configured to eject ink, wherein the printing head 340 may include a chamber storing ink, and a spray assembly disposed below the chamber including an ink transfer path connected to the inside of the chamber, and externally ejecting the ink that has passed the ink transfer path through a bottom surface.

According to an embodiment, the spray assembly may further include a piezoelectric element layer disposed below the chamber, and a nozzle plate disposed below the piezoelectric element layer and having a bottom surface being the bottom surface of the spray assembly.

According to an embodiment, the printing system may be an additive printing technology, and the second control command may be derived from a learning algorithm based on a plurality of earlier printing results. For example, the learning algorithm may include data preprocessing, feature extraction, model training, and validation, and a trained model may be utilized for real-time generation of control commands or periodic parameter updates.

Hereinafter, a printing method according to an embodiment will be described in detail based on the above descriptions.

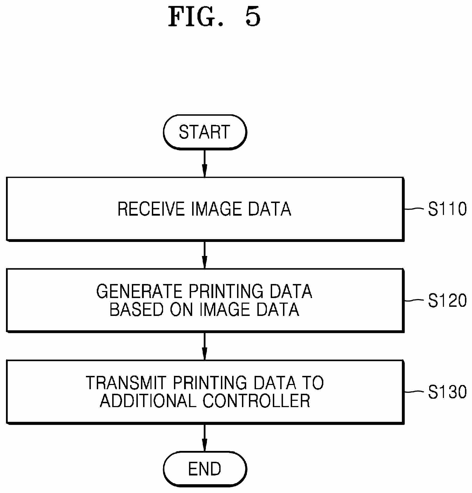

FIG. 5 is a flowchart of processes performed by the controller of FIG. 1. For reference, while describing FIG. 5, details that may be the same as or overlap those of FIGS. 1 to 4 may be omitted.

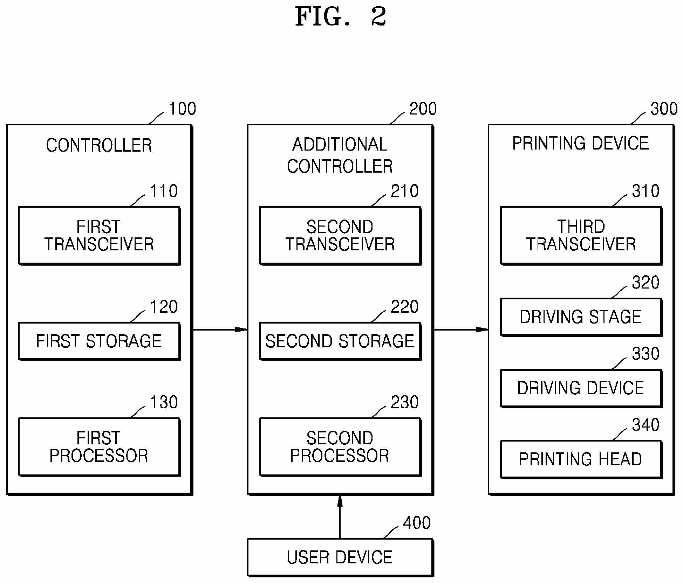

As shown in FIG. 5, the controller 100 of FIG. 1 or the first processor 130 of FIG. 2 may receive image data from an external device (not shown) such as the user device 400 in operation S110. The image data may be image data of a design drawing including a pattern to be printed on the substrate 10. The image data may be stored in the first storage 120.

As shown in FIG. 5, the controller 100 of FIG. 1 or the first processor 130 of FIG. 2 may generate printing data based on the image data in operation S120. The printing data may include location data and volume data as described above. In some cases, the printing data may further include trigger data for starting a process of the additional controller 200. The controller 100 of FIG. 1 or the first processor 130 of FIG. 2 may transmit the generated printing data to the additional controller 200 in operation S130.

According to an embodiment, the second control command may be derived from artificial intelligence based on a plurality of earlier printing results. For example, the artificial intelligence used in the present disclosure may utilize the plurality of earlier printing results as learning data and may serve to optimize performance of the printing system. The artificial intelligence system may be based on deep learning, a neural network, or a machine learning algorithm, and may recognize a pattern from input data and perform decision-making.

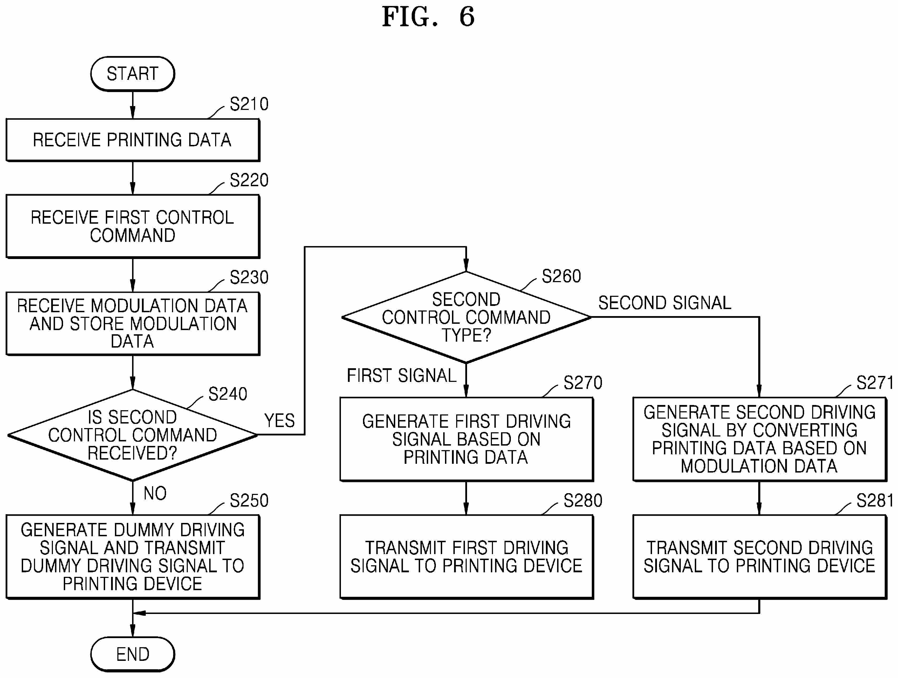

FIG. 6 is a flowchart of processes performed by the additional controller of FIG. 1. For reference while describing FIG. 5, details that are the same as or overlap those of FIGS. 1 to 4 may be omitted, and a subject that performs following processes may be the additional controller 200 or the second processor 230 of the additional controller 200.

As shown in FIG. 6, the printing method according to an embodiment may include receiving printing data from the controller 100 in operation S210, receiving a first control command in operation S220, and receiving and storing modulation data in operation S230.

Operation S210 may be receiving the printing data from the controller 100 through the second transceiver 210. The printing data may denote data obtained by converting an input image to a pre-set format to drive the printing device 300 as described above.

Operation S220 may be receiving the first control command from the user device 400 through the second transceiver 210. For example, the first control command may be command data and include an instruction in a binary format. For example, the first control command may be (0,1) or (1,0).

Operation S230 may be receiving the modulation data from the user device 400 after the first control command is received, and storing the received modulation data in the second storage 220 included in the additional controller 200. For example, the receiving and storing of the modulation data may be receiving of the modulation data from the user device 400 and storing of the same based on the first control command.

As shown in FIG. 6, the additional controller 200 may detect whether a second control command is received from the user device 400 for a pre-set time. For example, the additional controller 200 may obtain information about whether the second control command is received from the user device 400 for a pre-set time in operation S240. In other words, the printing method according to an embodiment may further include receiving the second control command and generating a driving signal based on the received second control command. The second control command may be a first signal or a second signal, and the driving signal may be a dummy driving signal, a first driving signal, or a second driving signal.

In the case that the additional controller 200 did not receive the second control command, the additional controller 200 may generate the dummy driving signal and transmit the generated dummy driving signal to the printing device 300.

For example, the printing method according to an embodiment may further include, in the case that the second control command is not received, generating the dummy driving signal and transmitting the generated dummy driving signal to the printing device 300 in operation S250. Even in the case that the dummy driving signal is transmitted to the printing device 300, the printing device 300 may not perform a printing operation. In other words, in the case that the second control command is not received for the pre-set time, the driving signal may be the dummy driving signal.

In the case that the additional controller 200 receives the first signal as the second control command in operation S260, the additional controller 200 may generate the first driving signal based on the printing data in operation S270.

For example, the printing method according to an embodiment may include generating the first driving signal based on the printing data in operation S270, and transmitting the generated first driving signal to the printing device 300 in operation S280. The first driving signal may be a signal waveform including information the same as that included in the printing data as described above. In other words, in the case that the additional controller 200 receives the second control command during the pre-set time and the second control command is the first signal, the driving signal may be the first driving signal including the same information as the printing data.

In the case that the additional controller 200 receives the second signal as the second control command in operation S260, the additional controller 200 may generate the second driving signal by converting the printing data based on the modulation data in operation S271.

For example, the printing method according to an embodiment may include generating the second driving signal by converting the printing data based on the modulation data in operation S271, and transmitting the generated second driving signal to the printing device 300 in operation S281. In other words, in the case that the additional controller 200 receives the second control command during the pre-set time and the second control command is the second signal, the driving signal may be the second driving signal including a piece of waveform information from among multiple pieces of pre-stored waveform information loaded from the memory and based on the modulation data.

For example, as described above, the printing data may include location data about locations where ink may be ejected from the printing device 300, and volume data about an amount of ink volume that may be ejected from each nozzle included in the printing device 300.

The modulation data may be data including address information where pieces of data stored in the memory may be assigned. For example, there may be first printing data for printing a line, and the modulation data may include first modulation data that may be address information of the memory where waveform information corresponding to the first printing data may be assigned. As such, the printing data may be converted into pre-stored data or waveform signal based on the modulation data. The second driving signal may be generated based on a waveform signal generated as a result of converting the printing data based on the modulation data. In other words, the second driving signal may include a waveform signal obtained by changing the location data and the volume data based on the modulation data.

For example, the first control command, the second control command, and the modulation data may be implemented as digital signals, and the second control command may be generated based on a user input that is input to the user device 400.

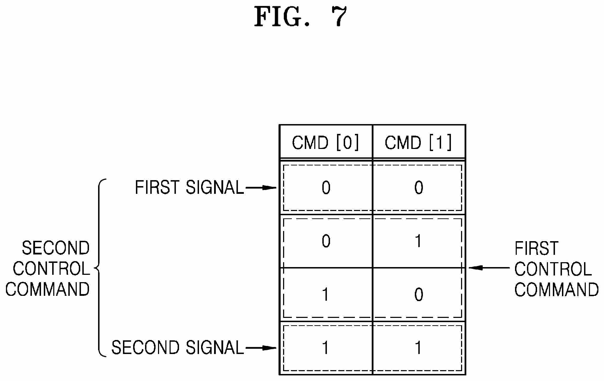

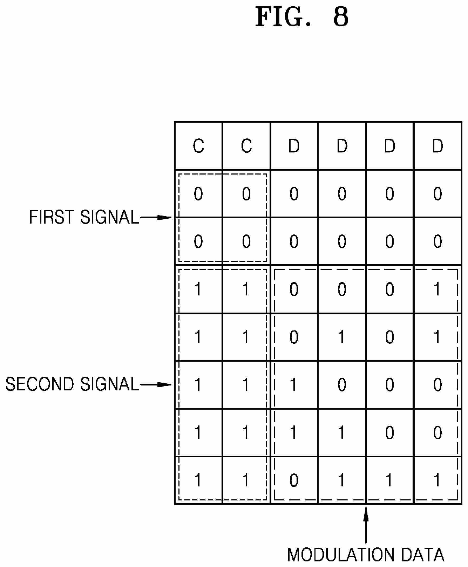

FIG. 7 is a schematic diagram showing examples of the first control command and the second control command, which may be implemented as binary numbers, and FIG. 8 is a schematic diagram showing examples of the first signal, the second signal, and the modulation data, which are implemented as binary numbers.

For reference, while describing FIGS. 7 and 8, details that are the same as or overlap those above may be omitted.

As shown in FIG. 7, the first control command may be an instruction for the additional controller 200 to receive and store the modulation data. For example, the first control command implemented as a binary number may be (0 1) or (1 0). Alternatively, the first control command may be an instruction for generating data pre-learned through a learning algorithm.

The second control command may include the first signal and the second signal. For example, the first signal implemented as a binary number may be (0 0), and the second signal implemented as a binary number may be (1 1). For example, in case that (0 0) is input, the first driving signal may be generated and transmitted to the printing device 300. For example, in the case that (1 1) is input, the second driving signal may be generated and transmitted to the printing device 300.

As shown in FIG. 8, in the case that (0 0) corresponding to the first signal is input, the modulation data is not input. As a result, in the case that (0 0) corresponding to the first signal is input, the first driving signal including the same information as the printing data may be generated and transmitted to the printing device 300.

In the case that (1 1) corresponding to the second signal is input, the modulation data may also be implemented as a binary number and include address information assigned to the memory. For example, the modulation data may be implemented as a binary number of 2 digits. As a result, the modulation data may indicate total 2 to 4th power, i.e., 16 pieces of address information. According to the address information indicated by the modulation data, the additional controller 200 may call from the memory waveform information that may replace a printing image.

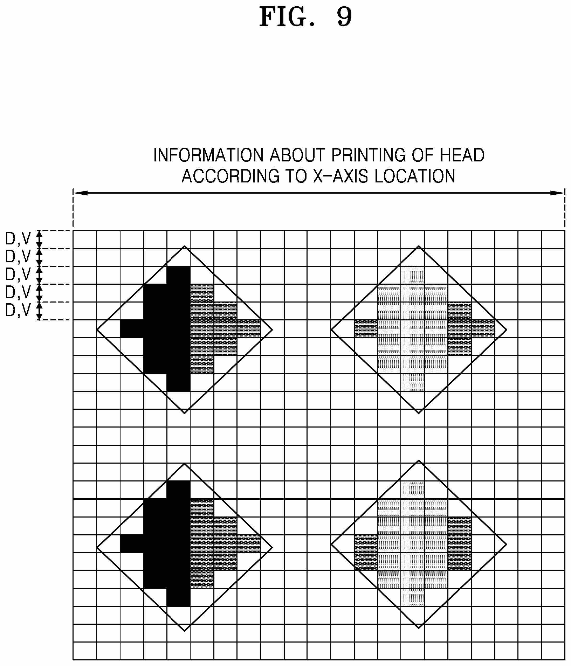

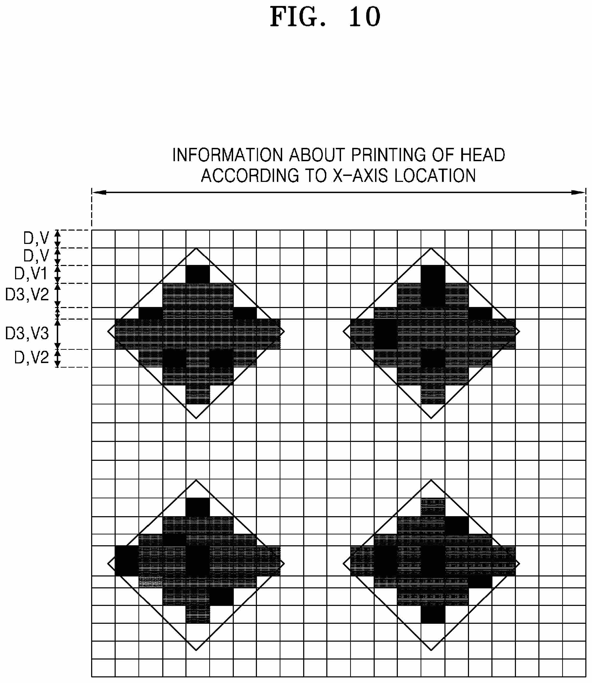

FIG. 9 is a schematic diagram showing a result of performing a printing operation by using a printing system and a printing method according to a comparative example, and FIG. 10 is a schematic diagram showing a result of performing a printing operation by using a printing system and a printing method according to an embodiment.

For reference, while describing FIGS. 9 and 10, details that may be the same as or may overlap those above may be omitted.

As shown in FIG. 9, it is identified that a relatively non-uniform pattern is printed as the result of performing the printing operation. It is identified that (D, V) that correspond to location data and volume data, respectively have been set to have same values for each nozzle. Accordingly, more printing spots are identified in the result of FIG. 9 than in the result of FIG. 10, and thus, precision of a printing process is low in the result of FIG. 9.

As shown in FIG. 10, it is identified that a relatively uniform pattern is printed as the result of performing the printing operation. It is identified that (D, V) that correspond to location data and volume data, have been set to (D, V1), (D3, V2), (D3, V3), or (D, V2), which are changed as needed, instead of being set to have the same values for each nozzle. Accordingly, it is identified that ink has been applied to a more uniform thickness in the result of FIG. 10 than in the result of FIG. 9, and thus a printing process with high precision has been performed in the result of FIG. 10.

For reference, (D, V1), (D3, V2), (D3, V3), and (D, V2), which are changed as needed, are pieces of data pre-obtained through results of performing existing printing processes, and may be pieces of data pre-stored in a user device or the like. The pieces of data, such as (D, V1), (D3, V2), (D3, V3), and (D, V2), which are changed as needed, may be big data automatically obtained by artificial intelligence, a learning algorithm, or the like. Alternatively, the pieces of data, such as (D, V1), (D3, V2), (D3, V3), and (D, V2), which are changed as needed, may be pieces of data directly input by a user and stored in the user device or the like.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. A printing system comprising:
a controller configured to generate printing data;
a user device configured to generate a first control command, generate modulation data based on a user input, and generate a second control command based on the user input;
an additional controller configured to receive the printing data and the second control command and generate a driving signal based on the second control command, and including a memory storing waveform information received from the user device; and
a printing device configured to perform a printing operation based on the driving signal.

2. The printing system of claim 1, wherein in the case that the second control command is a first signal, the driving signal is a first driving signal including same information as the printing data.

3. The printing system of claim 1, wherein in the case that the second control command is a second signal, the driving signal is a second driving signal including a piece of waveform information loaded from the memory based on the modulation data from among a plurality of pieces of pre-stored waveform information.

4. The printing system of claim 1, wherein the printing data comprises:
location data about locations where ink is ejected from the printing device;
and
volume data about ink volume ejected from each nozzle included in the printing device.

5. The printing system of claim 4, wherein the modulation data comprises address information about where a plurality of pieces of waveform information are stored in the memory.

6. The printing system of claim 5, wherein in the case that the second control command is a second signal, the driving signal is a second driving signal including waveform information assigned to the address information in the memory.

7. The printing system of claim 1, wherein the printing device comprises a printing head configured to eject ink,
wherein the printing head comprises:
a chamber storing ink; and
a spray assembly disposed below the chamber, the spray assembly including an ink transfer path connected to inside of the chamber, and the spray assembly externally ejecting the ink from a bottom surface that has passed through the ink transfer path.

8. The printing system of claim 7, wherein the spray assembly further comprises:
a piezoelectric element layer disposed below the chamber; and
a nozzle plate disposed below the piezoelectric element layer and having a bottom surface being the bottom surface of the spray assembly.

9. The printing system of claim 1, wherein the first control command, the second control command, and the modulation data are implemented as digital signals.

10. The printing system of claim 1, wherein the second control command is generated based on a user input that is input to the user device.

11. A printing method comprising:
receiving printing data from a controller;
receiving a first control command from a user device;
receiving modulation data from the user device and storing the modulation data based on the first control command;
receiving a second control command from the user device;
generating a driving signal based on the second control command; and
transmitting the driving signal to a printing device.

12. The printing method of claim 11, wherein, in the case that the second control command is not received for a pre-set time, the driving signal is a dummy driving signal.

13. The printing method of claim 11, wherein, in the case that the second control command is received for a pre-set time and the second control command is a first signal, the driving signal is a first driving signal including same information as the printing data.

14. The printing method of claim 11, wherein in the case that the second control command is received for a pre-set time and the second control command is a second signal, the driving signal is a second driving signal including a piece of waveform information from among a plurality of pieces of pre-stored waveform information, the piece of waveform information is loaded from a memory and is based on the modulation data.

15. The printing method of claim 11, wherein the printing data comprises:
location data about locations where ink is ejected from the printing device;
and
volume data about ink volume ejected from each nozzle included in the printing device.

16. The printing method of claim 15, wherein the second driving signal comprises:
a waveform signal obtained by changing the location data; and
the volume data based on the modulation data.

17. The printing method of claim 11, wherein the first control command, the second control command, and the modulation data are implemented as digital signals.

18. The printing method of claim 11, wherein the second control command is generated based on a user input that is input to the user device.
